# EUROPÄISCHE PATENTANMELDUNG

(11) **EP 4 092 279 A1**
(43) Veröffentlichungstag der Anmeldung: **23.11.2022**
(21) Anmeldenummer: 22171070.0
(22) Anmeldetag: 02.05.2022
(51) Int. Cl.: F16B 13/06

(54) **SPREIZANKER**

(30) Priorität: 21.05.2021 DE 102021113218
(71) Anmelder: fischerwerke GmbH & Co. KG, 72178 Waldachtal (DE)
(72) Erfinder: Vogler, Falko, 77761 Schiltach (DE); Linka, Martin, 72160 Horb a.N. (DE); Hacker, Oliver, 72227 Egenhausen (DE)
(74) Vertreter: Suchy, Ulrich Johannes

(57) **Zusammenfassung**

Die Erfindung betrifft einen Spreizanker (1) mit einer Spreizhülse (6), die ein Spreizelement (12) mit einem Halteelement (15) aufweist. Erfindungsgemäß ist das Halteelement (15) derart angeordnet, dass eine auf das Halteelement (15) wirkende, zur Längsachse (L) hin gerichtete erste Kraft (F₁) eine resultierende zweite Kraft (F₂) bewirkt, die das freie Ende (18) des Spreizelements (12) wippenartig nach außen, weg von der Längsachse (L) drückt.

## Beschreibung

Die Erfindung betrifft einen Spreizanker zum Verankern in einem Bohrloch mit den Merkmalen des Oberbegriffs des Anspruchs 1.

Aus der Patentschrift EP 0 176 519 B1 ist ein gattungsgemäßer Spreizanker zum Verankern in einem Bohrloch bekannt. Derartige Spreizanker werden beispielsweise dazu verwendet, um Anbauteile, wie beispielsweise eine Konsole oder einen Träger, an einer Wand oder einer Decke zu befestigen. Hierzu wird zunächst ein Bohrloch in die Wand oder Decke, allgemein in den Verankerungsgrund gebohrt, das Anbauteil in die gewünschte Position gesetzt und der Spreizanker durch ein Durchgangsloch des Anbauteils hindurch in das Bohrloch eingebracht und darin verankert. Zum Verankern wird ein Spreizkörper des Spreizankers in eine Spreizhülse des Spreizankers durch eine Bewegung entlang einer Längsachse des Spreizankers eingezogen und die Spreizhülse dadurch aufgespreizt, das heißt in ihrem Durchmesser vergrößert. Um die Spreizhülse im Bohrloch in einer vorgesehenen Position zu halten, weist die Spreizhülse zwei nach außen abstehende flügelartige Halteelemente auf, die nach dem Einbringen des Spreizankers in das Bohrloch mit der Wand des Bohrlochs in Anlage sind, so dass die Spreizhülse form- oder reibschlüssig mit einer Haltekraft im Bohrloch gehalten ist. Die Haltekraft ist dabei direkt davon abhängig, wie stark die Halteelemente gegen die Wand des Bohrlochs verspannt werden, was wiederum direkt davon abhängt, ob das Bohrloch eng oder weit, also im oberen oder unteren Toleranzbereich gebohrt wurde. Dabei ist nachteilig, dass durch die auf die Halteelemente wirkende Haltekraft die Spreizhülse gegen den Spreizkörper gepresst wird, was die Reibung zwischen der Spreizhülse und dem Spreizkörper und damit die zum Einziehen des Spreizkörpers in die Spreizhülse erforderliche Axialkraft erhöht.

Ein Spreizanker, bei dem Halteelemente derart an der Spreizhülse angeordnet sind, dass sie die Reibung zwischen der Spreizhülse und dem Spreizkörper nicht erhöhen, so dass die Spreizhülse bereits bei geringer Axialkraft aufgespreizt werden kann, ist aus der Europäischen Patentschrift EP 3 478 972 B1 bekannt. Der aus dieser Patentschrift vorbekannte Spreizanker, ein sogenannter Bolzenanker, weist Halteelemente auf, die an einem ringförmigen Verbindungselement der Spreizhülse angeordnet sind, das Spreizelemente der Spreizhülse miteinander verbindet, selbst aber nicht aufgespreizt wird. Nach dem Einbringen des Spreizankers in ein Bohrloch drücken die Halteelemente die Spreizelemente somit nicht gegen den Spreizkörper. Der Spreizkörper kann in diesem Fall bereits mit einer relativ geringen Axialkraft in die Spreizhülse eingezogen werden, was verhindert, dass die Spreizhülse mit dem Spreizkörper beim Anziehen des Spreizankers zum Verspreizen mit aus dem Bohrloch bewegt wird.

Aufgabe der Erfindung ist, einen alternativen Spreizanker vorzuschlagen, bei dem die Reibung zwischen dem Spreizkörper und der Spreizhülse beim Aufspreizen ebenfalls verringert ist.

Diese Aufgabe wird erfindungsgemäß durch einen Spreizanker mit den Merkmalen des Anspruchs 1 gelöst. Der erfindungsgemäße Spreizanker ist in einem korrespondierenden Bohrloch durch Aufspreizen verankerbar. "Korrespondierend" bedeutet hier, dass der Spreizanker und das Bohrloch so aufeinander abgestimmt sind, dass der Spreizanker im Bohrloch beim Aufspreizen ausreichend Halt zum Verankern findet. Dies wird im Regelfall dadurch erreicht, dass der Spreizanker für einen genau definierten Nenndurchmesser eines Bohrlochs verwendet werden darf. So darf beispielsweise ein Spreizanker mit Nenndurchmesser "10 Millimeter" planmäßig nur in einem Bohrloch mit Nenndurchmesser "10 Millimeter" eingesetzt werden. Das Bohrloch ist hierzu mit einem standardisierten Bohrer herzustellen, sodass das Bohrloch einen Durchmesser aufweist, der im Rahmen vorgegebener Toleranzen dem Nenndurchmesser "10 Millimeter" entspricht. In diesem Fall ist gewährleistet, dass der Anker mit Nenndurchmesser "10 Millimeter" so an der Wand des Bohrlochs anliegen kann, dass er nach dem Aufspreizen ausreichend Halt findet, um die vorgesehenen Haltekräfte auf die Wand des Bohrlochs übertragen zu können. Ein "Spreizanker" im Sinne dieser Erfindung ist beispielsweise ein sogenannter Bolzenanker, wie beispielsweise der fischer Bolzenanker FAZ II, oder ein sogenannter Hülsenanker, wie beispielsweise der fischer Hochleistungsanker FH II. Derartige Spreizanker werden durch "Aufspreizen" im Bohrloch verankert, also indem ein Spreizteil des Spreizankers im Durchmesser vergrößert und gegen die Wand des Bohrlochs verpresst wird.

Der erfindungsgemäße Spreizanker weist hierfür einen Spreizkörper und als Spreizteil eine Spreizhülse auf. Die Spreizhülse weist Spreizelemente auf, die durch eine Bewegung des Spreizkörpers entlang einer Längsachse des Spreizankers und durch ein durch die Bewegung bedingtes Einziehen des Spreizkörpers in die Spreizhülse aufspreizbar sind. Die "Längsachse" verläuft in Richtung der größten Ausdehnung des Spreizankers mittig in einem Querschnitt durch einen Schaft des Spreizankers. Die Spreizelemente der Spreizhülse sind in Umfangsrichtung, also um die Längsachse herum, voneinander getrennt, insbesondere durch Schlitze, die insbesondere axial, parallel zur Längsachse, verlaufen, und insbesondere voneinander beabstandet. Vorzugsweise sind die Spreizelemente über Anbindungen mit einem Hülsenkörper verbunden, sodass der Hülsenkörper und die Spreizelemente gemeinsam die Spreizhülse bilden. Insbesondere sind die Spreizelemente flächige, insbesondere in Umfangsrichtung gekrümmte Spreizschalen, die insbesondere mit der Verbindungshülse verbunden sind und kragarmförmig von der Verbindungshülse in Richtung zum Spreizkörper hin abstehen. Allgemein bedeutet "Hülse" hier nicht, dass die Spreizhülse ein in Umfangsrichtung vollständig geschlossener Körper sein muss. Insbesondere ist mit "Hülse" beispielsweise auch ein Blechteil gemeint, das in Umfangsrichtung gebogen, aber nicht im Umfang geschlossen ist. Der Spreizkörper ist in einem unverspreizten Zustand insbesondere in Längsrichtung vor der Spreizhülse angeordnet, wobei "vor" sich auf die Einbringrichtung bezieht, in der der Spreizanker planmäßig in ein Bohrloch eingebracht wird. "Vor" bedeutet somit, dass der Spreizkörper vor einem vorderen Ende der Spreizhülse beim planmäßigen Einbringen des Spreizankers in das Bohrloch gelangt.

Der Spreizkörper selbst nimmt im Durchmesser zumindest abschnittsweise in Einbringrichtung zu. Das heißt, dass das vordere Ende des Spreizkörpers einen größeren Durchmesser aufweist als das hintere Ende. Der Spreizkörper ist insbesondere konisch, also kegelstumpfartig oder in Form eines Kegelstumpfs ausgestaltet, wie dies einem Fachmann aus dem Stand der Technik bekannt ist. Der Spreizkörper kann einstückig und fest mit einem Schaft des Spreizankers verbunden sein, wie dies bei Bolzenankern üblich ist, oder beispielsweise als Mutter mit einem Innengewinde ausgeführt sein, in die eine Schraube des Spreizankers eingreift, wie dies für Hülsenanker typisch ist.

Der erfindungsgemäße Spreizanker ist derart gestaltet, dass nach dem planmäßigen Einbringen des Spreizankers in das korrespondierende Bohrloch der Spreizkörper entlang der Längsachse relativ zur Spreizhülse bewegt werden kann, derart, dass freie Enden der Spreizelemente, die im unverspreizten Zustand insbesondere in Richtung der Längsachse zum Spreizkörper hin gerichtet sind, um Schwenkachsen nach außen, von der Längsachse weg, bewegbar sind. Insbesondere liegen die freien Enden der Spreizelemente bereits im unverspreizten Zustand am Spreizkörper an und werden durch die Relativbewegung des Spreizkörpers zu den Spreizelementen von dem Spreizkörper radial nach außen gedrückt und somit aufgespreizt. Der Spreizkörper bewegt sich dabei insbesondere im Bohrloch nach hinten, also in Richtung zum Bohrlochmund, während die Spreizhülse möglichst derart axialfest im Bohrloch gehalten ist, dass sich die Spreizhülse nicht mit dem Spreizkörper mitbewegt, da dies ein Aufspreizen der Spreizhülse erschweren oder gar verhindern würde und der Spreizanker im Bohrloch nicht planmäßig verankert werden könnte.

Daher weist mindestens ein Spreizelement des erfindungsgemäßen Spreizankers mindestens ein nach außen, von einem Grundkörper des Spreizelements in Richtung von der Längsachse weg abstehendes Halteelement auf, das mit dem Grundkörper des Spreizelements verbunden ist. Der Grundkörper bildet insbesondere den flächigen Teil des Spreizelements, der zum Aufspreizen vorgesehen ist und der das freie Ende umfasst, auf das beim Aufspreizen der Spreizkörper wirkt. Das Halteelement steht lokal in radialer Richtung über den flächigen Grundkörper über und ist derart gestaltet, dass sein radial äußerer Rand beim Einbringen des Spreizankers in das Bohrloch mit der Wand des Bohrlochs in Anlage kommt, wodurch die Spreizhülse form- und/oder reibschlüssig im Bohrloch gehalten ist. Insbesondere ist in einem unverspreizten Zustand der äußere Rand des Halteelements in radialer Richtung weiter von der Längsachse entfernt als das freie Ende des Spreizelements. Der äußere Rand des Halteelements bildet somit im unverspreizten Zustand insbesondere den radial äußeren Rand des Spreizelements.

Erfindungsgemäß ist das Halteelement derart am Grundkörper angeordnet, dass eine auf das Halteelement wirkende, nach innen, zur Längsachse hin gerichtete erste Kraft eine resultierende zweite Kraft bewirkt, die das freie Ende des Spreizelements nach außen, weg von der Längsachse, drückt. Die erste Kraft kann insbesondere radial nach innen wirken, insbesondere als Kraftkomponente der von der Bohrlochwand auf das Halteelement wirkenden Haltekraft. Durch die resultierende zweite Kraft, die nach außen, also weg von der Längsachse gerichtet ist, wird der Druck, mit dem das freie Ende des Spreizelements nach dem Einbringen des Spreizankers in ein Bohrloch beim Aufspreizen gegen den Spreizkörper drückt, verringert. Das Spreizelement bildet erfindungsgemäß eine Art Wippe, bei der eine auf das Halteelement wirkende Kraft eine Gegenkraft am freien Ende bewirkt. Insbesondere bildet die Schwenkachse das Lager der Wippe und der Grundkörper und das Halteelement gemeinsam den Balken, der um die Schwenkachse schwenkt. Die zum Einziehen des Spreizkörpers in die Spreizhülse benötigte Axialkraft ist durch die Verringerung des Drucks und damit der Reibkraft zwischen Spreizkörper und Spreizhülse reduziert.

Vorzugsweise ist der Widerstand, der von dem Spreizelement, das das Halteelement umfasst, einem Aufspreizen entgegengesetzt wird, kleiner als der Widerstand, den das Halteelement einer Verformung radial zur Längsachse hin entgegensetzt. Umfasst ein Spreizelement mehrere Halteelemente, so ist vorzugsweise der Widerstand, der von der Spreizhülse einem Aufspreizen entgegengesetzt wird, kleiner als die Summe der Widerstände, die die Halteelemente einer Verformung radial zur Längsachse hin entgegensetzen. Allgemein bedeutet dies, dass die Summe der Widerstände, die die Spreizhülse einem Aufspreizen entgegensetzt, kleiner ist als die Summe der Widerstände, die die Halteelemente einer Verformung zur Längsachse hin entgegensetzen. Die Halteelemente sind steifer, sie lassen sich schwerer verformen als ein Element, dass die Spreizelemente in ihrer nicht aufgespreizten Position hält. Ein derartiges Element ist beispielsweise eine weiter unten im Text beschriebene Anbindung oder ein die Spreizelemente umfassender Ring, wie er aus dem eingangs erwähnten Patent EP 3 478 972 B1 bekannt ist. Somit ist gewährleistet, dass Grundkörper und Halteelement den biegesteifen Balken der Wippe bilden und die erste, auf ein Halteelement wirkende Kraft tatsächlich eine entlastende zweite Kraft bewirkt, und nicht (nur) die Halteelemente nach innen, zur Längsachse hin verformt.

Bei einer bevorzugten Ausgestaltungsform des erfindungsgemäßen Spreizankers ist die Schwenkachse zwischen dem freien Ende des Spreizelements und einem radial äußeren Rand des Halteelements angeordnet. "Zwischen" ist hier auf die Längsrichtung bezogen, also auf die Richtung, in der der Spreizkörper beim Aufspreizen relativ zur Spreizhülse entlang der Längsachse bewegt wird. Durch diese Positionierung der Schwenkachse ist die Funktion der oben bereits beschrieben Wippe gewährleistet.

Weiterhin ist bevorzugt, dass jedes Spreizelement durch mindestens eine Anbindung mit einem Hülsenabschnitt der Spreizhülse verbunden ist. Insbesondere sind die Anbindungen mit dem Hülsenabschnitt und den Spreizelementen einstückig, beispielsweise durch Stanzbiegen aus einem Stahlblech hergestellt und bilden gemeinsam die Spreizhülse. Die Schwenkachse eines Spreizelements liegt vorzugsweise in der Anbindung, mit der es mit dem Hülsenabschnitt verbunden ist. Die Anbindung ist somit das Lager der Wippe, das sich elastisch und/oder plastisch verformt, um das Schwenken zu ermöglichen. Beim Aufspreizen bildet die Anbindung ein Biegegelenk. Die Anbindung ist insbesondere derart gestaltet, dass die Verformung bereits durch die erste Kraft hervorgerufen wird, die auf das Halteelement wirkt.

Um zu gewährleisten, dass die erste, auf das Halteelement wirkende Kraft auch in diesem Fall, wenn zumindest eine Anbindung vorhanden ist, eine zweite entlastende Kraft bewirkt, die das freie Ende des Spreizelements nach außen, weg von der Längsachse drückt, muss der Widerstand, den die Anbindung einem Aufspreizen des Spreizelements entgegensetzt, kleiner sein, als der Widerstand, den das Halteelement einer Verformung zur Längsachse hin entgegensetzt. Ebenso muss der Widerstand des Grundkörpers und einer Verbindungsstelle zwischen dem Grundkörper und dem Halteelement gegen eine Verformung größer sein als der der Anbindung, damit das Halteelement und der Grundkörper gemeinsam als Balken der Wippe wirken und um die als Schwenkachse wirkende Anbindung schwenken können. Insbesondere ist das Widerstandsmoment der Anbindung, das einer Verformung der Anbindung um die Schwenkachse entgegensteht, kleiner als das Widerstandsmoment des Halteelements und der Verbindungsstelle, das der Verformung des Halteelements zur Längsachse hin entgegensteht, sowie des Widerstandsmoments des Grundkörpers. Sind mehrere Halteelemente am Grundkörper angeordnet, so muss die Summe der Widerstandsmomente der Halteelemente beziehungsweise die Summe der Widerstandsmomente der Verbindungsstellen größer sein als das der Anbindung. Sind mehrere Anbindungen zwischen einem Spreizelement und dem Hülsenabschnitt vorhanden, so muss die Summe der Widerstände der Anbindungen verwendet werden.

Vorzugsweise ist die Dicke der Anbindung gleich der Dicke der Verbindungsstelle zwischen dem Halteelement und dem Grundkörper des Spreizelements. Mit "Dicke" ist hier die Materialdicke im Bereich der Verbindungsstelle gemeint. Alternativ kann die Dicke der Anbindung beispielsweise durch eine beim Herstellen der Spreizhülse eingedrückte Nut gegenüber der Dicke der Verbindungsstelle reduziert sein, wodurch eine Schwächung und somit eine definierte Schwenkachse gebildet ist. Zudem oder alternativ ist der Querschnitt der Anbindung kleiner als der Querschnitt der Verbindungsstelle. Bei mehreren Verbindungsstellen und/oder Anbindungen ist jeweils die Summe der Querschnittflächen maßgebend.

Die Verbindungsstelle ist insbesondere die Stelle, an der sich der Querschnitt sprungartig verändert, also der Querschnitt des Halteelements am Grundkörper anliegt.

Bei einer bevorzugten Ausgestaltungsform des erfindungsgemäßen Spreizankers ist das Halteelement ein kragarmförmiger Flügel. Insbesondere weist der Flügel dieselbe Materialstärke wie der Grundkörper des Spreizelements auf und ist mit dem Grundkörper einstückig als Blechbiegeteil aus einem Stahlblech hergestellt.

Vorzugsweise ist das Halteelement derart gestaltet, dass ein Abstand von der Längsachse entgegen der Einbringrichtung zunimmt. Insbesondere bildet der radial äußere Rand des Halteelements das hintere Ende des Halteelements.

Insbesondere ist das Halteelement als schräg nach außen gestellter, kragarmförmiger Flügel ausgestaltet, dessen innere, der Längsachse zugewandte Seite nicht an einem Schaft des Spreizankers anliegt, sondern von diesem beabstandet ist. Eine wippenartigen Kippbewegung des Spreizelements um die Schwenkachse wird somit nicht durch eine Anlage des Halteelements am Schaft des Spreizankers behindert.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiteren Ausführungsbeispiele aufweisen, sind möglich.

Die Erfindung wird nachfolgend anhand von zwei Ausführungsbeispielen näher erläutert.

Es zeigen:
- Figur 1: einen vorderen Teil eines ersten erfindungsgemäßen Spreizankers in einer Seitenansicht;
- Figur 2: einen Axialschnitt durch den vorderen Teil des ersten erfindungsgemäßen Spreizankers;
- Figur 3: eine Draufsicht auf eine Abwicklung der Spreizhülse des ersten erfindungsgemäßen Spreizankers;
- Figur 4: einen vorderen Teil eines zweiten erfindungsgemäßen Spreizankers in einer perspektivischen Ansicht; und
- Figur 5: eine Draufsicht auf eine Abwicklung der Spreizhülse des zweiten erfindungsgemäßen Spreizankers.

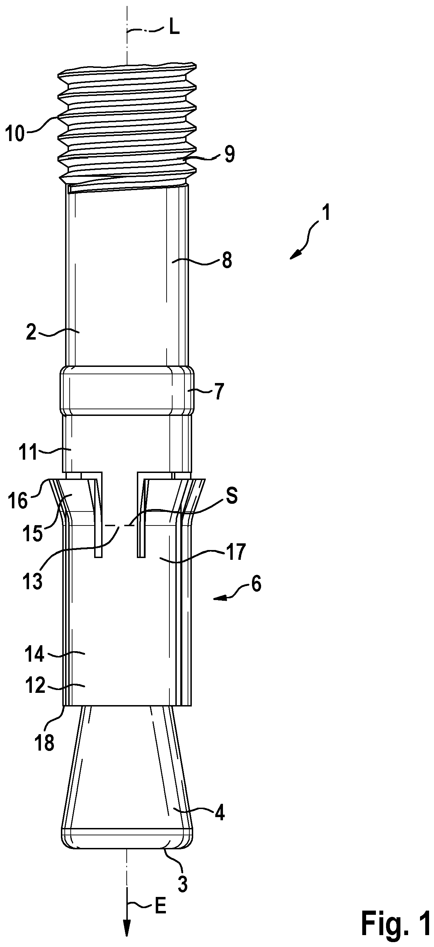

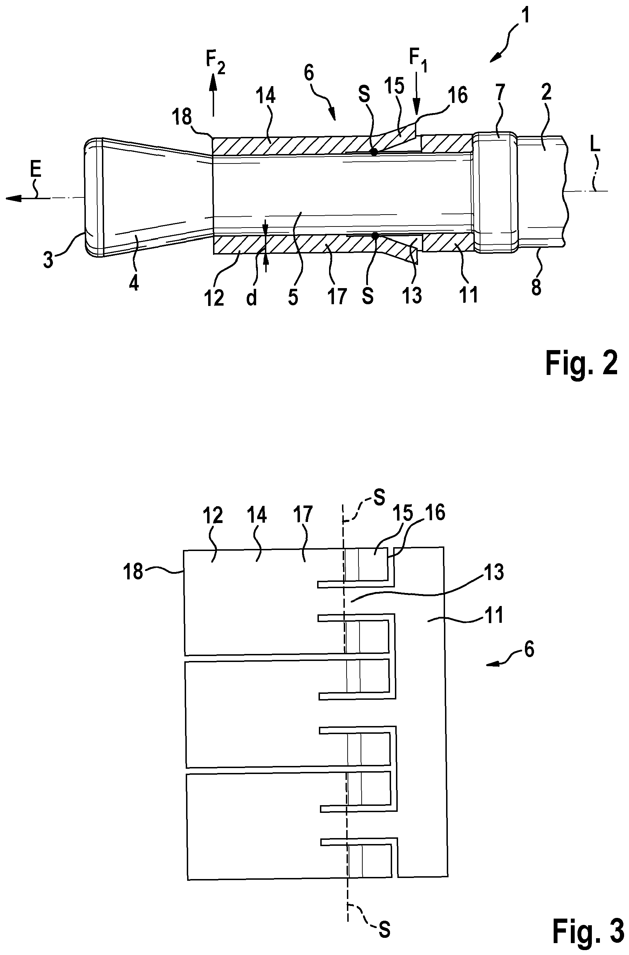

In den Figuren 1 und 2 ist ein erfindungsgemäßer Spreizanker 1 zum Verankern in einem Bohrloch dargestellt, der sich entlang einer Längsachse L erstreckt. Der Spreizanker 1 weist einen Schaft 2 auf, an dessen in Einbringrichtung E vorderen Ende 3 ein kegelstumpfförmiger Spreizkörper 4 ausgeformt ist. Die Längsachse L liegt mittig im Schaft 2. Das in Einbringrichtung E vordere Ende 3 des Schafts 2 ist das Ende, mit dem voraus der Spreizanker 1 planmäßig in ein korrespondierendes Bohrloch (nicht dargestellt) eingebracht wird. Der Spreizkörper 4 nimmt im Durchmesser entgegen der Einbringrichtung E ab und geht in einen zylindrischen Halsabschnitt 5 (Figur 2) über, an dem eine Spreizhülse 6 angeordnet ist, die den Halsabschnitt 5 fast vollständig umfasst. An den Halsabschnitt 5 schließt sich ein Ringbund 7 mit größerem Durchmesser als rückseitiger Anschlag für die Spreizhülse 6 an und daran ein gewindeloser, gegenüber dem Ringbund 7 im Durchmesser reduzierter Schaftteil 8, der in einen Schaftteil 9 mit Außengewinde 10 übergeht. Auf das Außengewinde 10 kann beispielsweise eine Mutter (nicht dargestellt) aufgeschraubt werden, mit der der Spreizanker 1 zum Verankern in einem Bohrloch mit einen Anbauteil an einem Verankerungsgrund (beides ebenfalls nicht dargestellt) befestigt und verspannt werden kann. Der Schaft 2 des Spreizankers 1 ist aus einem Stahldraht durch Kaltmassivumformung hergestellt.

Die Spreizhülse 6, die in ihrer Abwicklung in Figur 3 dargestellt ist, umfasst einen in der Abwicklung rechteckigen Hülsenabschnitt 11, mit dem drei Spreizelemente 12 durch jeweils eine Anbindung 13 einstückig verbunden sind. Die Spreizhülse 6 ist aus einem Stahlblech einstückig als Stanzbiegeteil hergestellt. Jede Anbindung 13 ist ebenfalls ein rechteckförmiger Blechstreifen und geht mittig jeweils in einen Grundkörper 14 des Spreizelements 12 über. Die Grundkörper 14 weisen ebenfalls eine rechteckförmige Grundform auf. An jedem Grundkörper 14 sind jeweils zwei rechteckförmige Halteelemente 15 einstückig angebunden, die sich, bezogen auf die Längsachse L, parallel zur Anbindung 13 erstrecken. Die Halteelemente 15 sind allerdings nicht direkt mit dem Hülsenabschnitt 11 verbunden, sondern sie bilden kragarmförmige Flügel, die, wie in den Figuren 2 und 3 zu sehen ist, radial zur Längsachse L über den Grundkörper 14 nach außen überstehen. Die Halteelemente 15 sind derart gestaltet, dass ihr Abstand von der Längsachse L entgegen der Einbringrichtung E zunimmt, so dass, wie dies in Figur 2 zu sehen ist, ein radial äußerer Rand 16 des Halteelements 15 auch das hintere Ende des Halteelements 15 bildet. Die Spreizhülse 6 weist eine konstante Dicke d auf, sodass die Dicke der Anbindung 13 gleich der Dicke einer Verbindungsstelle 17 ist, an der das Halteelement 15 in den Grundkörper 14 des Spreizelements 12 übergeht. Die Verbindungsstelle 17 ist die Stelle, an der sich der Querschnitt ausgehend vom Halteelement 15 sprungartig vergrößert und in den Querschnitt des Grundkörpers 14 übergeht. An der Verbindungsstelle 17 liegt das Halteelement 15 am Grundkörper 14 an.

Zum Verankern des Spreizankers 1 in einem Bohrloch wird der konische Spreizkörper 4 entlang der Längsachse L relativ zur Spreizhülse 6 zur Spreizhülse 6 hingezogen, indem die (nicht dargestellte) Mutter auf das Außengewinde 10 aufgeschraubt wird. Durch das Einziehen des Spreizkörpers 4 in die Spreizhülse 6 werden die am Spreizkörper 4 anliegenden freien Enden 18, sowie die Grundkörper 14 der Spreizelemente 12 um die Schwenkachse S nach außen, von der Längsachse L weg, bewegt. Die Schwenkachse S liegt in einer Radialebene zur Längsachse L. Damit bei der Bewegung des Spreizkörpers 4 entgegen der Einbringrichtung E zum Aufspreizen der Spreizhülse 6 die Spreizhülse 6 nicht mit dem Spreizkörper 4 aus dem Bohrloch heraus bewegt, sondern aufgespreizt wird, liegen, wenn der Spreizanker 4 planmäßig im Bohrloch angeordnet ist, die Halteelemente 15, zumindest und insbesondere die äußeren Ränder 16 der Halteelemente 15, an der Wand des Bohrlochs an, wodurch auf die äußeren Ränder 16 eine, radial nach innen zur Längsachse L hin gerichtete, erste Kraft F₁ wirkt, die eine resultierende zweite Kraft F₂ bewirkt, die das freie Ende 18 des Spreizelements 12 nach außen, weg von der Längsachse L, drückt. Dadurch wird die zwischen dem Spreizkörper 4 und den Spreizelementen 12 der Spreizhülse 6 wirkende Reibkraft reduziert oder sogar aufgehoben, wobei das vordere Ende der Spreizelemente 12 nach außen, gegen die Bohrlochwand, bewegt werden kann, sodass der Spreizkörper 4 leichter in die Spreizhülse 6 eingezogen werden kann. Wie in Figur 2 zu sehen ist, bilden der Grundkörper 14 und das Halteelement 15 des Spreizelements 12 eine Art Wippe, wobei die Schwenkachse S eine Art Lager für die Wippe bildet, um die das Halteelement 15 und der Grundkörper 14 gemeinsam als Balken schwenken. Die Schwenkachse S liegt im Bereich der Anbindung 13 und, bezogen auf die Längsachse L, zwischen dem freien Ende 18 des Spreizelements 12 und dem radial äußeren Rand 16 des Halteelements 15.

Um zu gewährleisten, dass das Halteelement 15 und der Grundkörper 14 des Spreizelements 12 als Wippe wirken, ist der Widerstand, der von dem Spreizelement 12, an dem die Halteelemente 15 angeordnet sind, dem Aufspreizen entgegengesetzt wird, kleiner als der Widerstand, den die beiden Halteelemente 15 einer Verformung radial zur Längsachse L hin entgegensetzen. Anders ausgedrückt, müssen die Halteelemente 15 und die Verbindungsstellen 17 im Vergleich zur Anbindung 13 so steif und stabil ausgeführt sein, dass durch den Druck, den die erste Kraft F₁ auf die beiden Halteelemente 15 ausübt, in der Anbindung 13 ein elastisches und/oder plastisches Gelenk entsteht, das die Schwenkachse S bildet, und nicht im Bereich der Verbindungstellen 17 oder in den Halteelementen 15 selbst. Im Ausführungsbeispiel der Figuren 1 bis 3 sind die Querschnitte der Verbindungsstellen 17 und die der Anbindung 13 ungefähr gleich groß, so dass die Summe der Querschnitte der Verbindungsstellen 17 jedes Spreizelements 12 größer ist als der Querschnitt der Anbindung 13, wodurch auch die Summe der Widerstandsmomente der Verbindungsstellen 17, die einem Schwenken der Halteelemente 15 entgegenwirken, größer ist, als das entsprechende Widerstandsmoment der Anbindung 13.

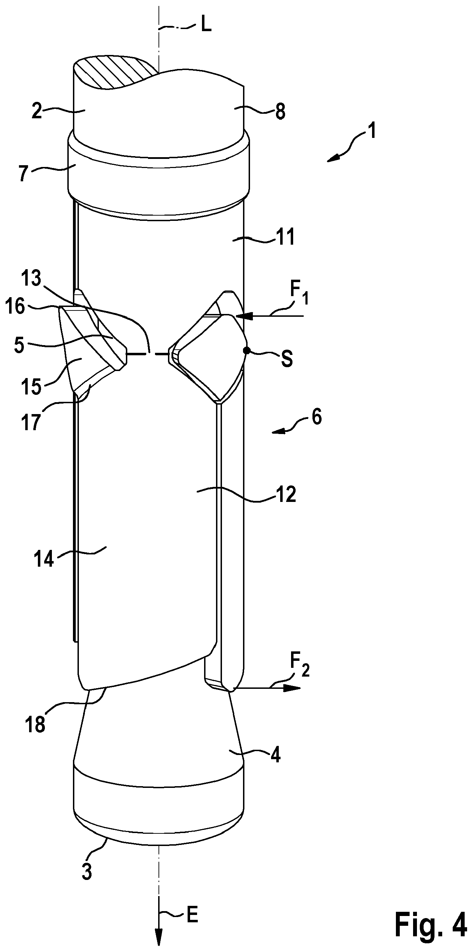

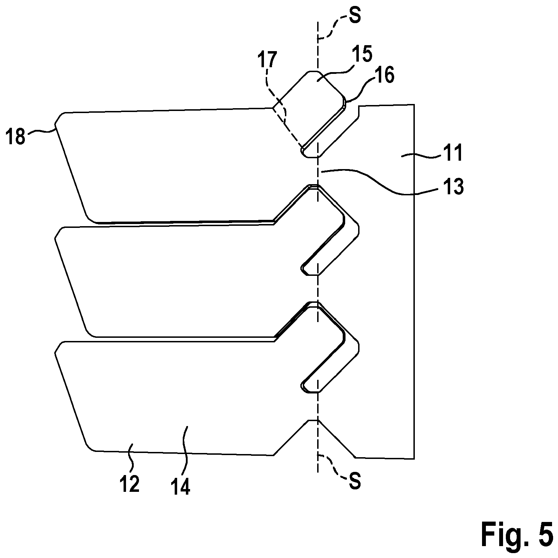

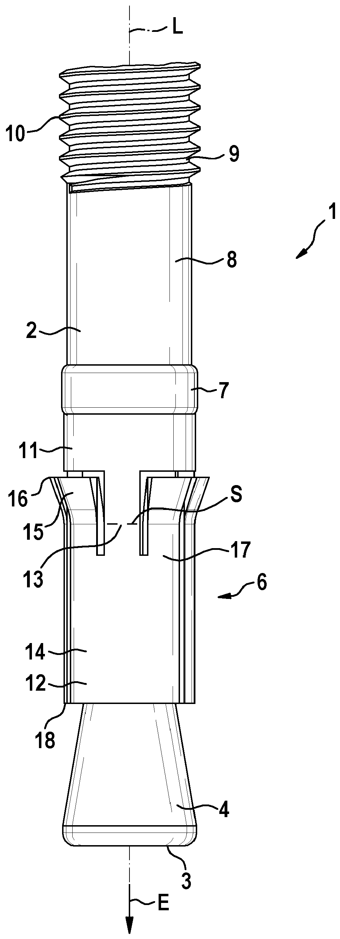

In den Figuren 4 und 5 ist ein zweiter erfindungsgemäßer Spreizanker 1 dargestellt. Gleiche Bauteile sind mit gleichen Bezugszeichen versehen. Um Wiederholungen zu vermeiden, wird nachfolgend nur auf die Unterschiede zu dem in den Figuren 1 bis 3 abgebildeten ersten erfindungsgemäßen Spreizanker 1 eingegangen.

Der zweite erfindungsgemäße Spreizanker 1 weist eine Anbindung 13 auf, mit einem minimalen Querschnitt, der als Gelenk die Schwenkachse S bildet, die in einer Radialebene zur Längsachse L liegt. Das einzige Halteelement 15 erstreckt sich quer zur Längsachse L und ist an der Verbindungsstelle 17 am Grundkörper 14 angeordnet, die ebenfalls quer zu einer Radialebene zur Längsachse L verläuft. Die Verbindungsstelle 17 weist in diesem Fall eine mehr als doppelt so große Querschnittsfläche wie die Anbindung 13 auf, mit einem entsprechend größeren Widerstandsmoment, sodass auch in diesem Fall das Halteelement 15 mit dem Grundkörper 14 eine Art Wippe bilden, so dass eine erste Kraft F_{1,} die von der Bohrlochwand auf den äußeren Rand des Halteelements 15 wirkt, eine resultierende zweite Kraft F₂ bewirkt, wie dies in Figur 4 zu sehen ist.

### Bezugszeichenliste

### Spreizanker

- 1: Spreizanker
- 2: Schaft
- 3: vorderes Ende des Schafts 2
- 4: Spreizkörper
- 5: Halsabschnitt
- 6: Spreizhülse
- 7: Ringbund
- 8: gewindeloser Schaftteil
- 9: Schaftteil mit Außengewinde 10
- 10: Außengewinde
- 11: Hülsenabschnitt
- 12: Spreizelement
- 13: Anbindung
- 14: Grundkörper des Spreizelements 12
- 15: Halteelement
- 16: äußerer Rand des Halteelements 15
- 17: Verbindungsstelle
- 18: freies Ende des Spreizelements 12
- d: Dicke der Anbindung 13 und der Verbindungsstelle 17
- E: Einbringrichtung
- F₁: erste Kraft
- F₂: zweite Kraft
- L: Längsachse
- S: Schwenkachse

## Patentansprüche

1. Spreizanker (1) zum Verankern in einem Bohrloch,
wobei der Spreizanker (1) einen Spreizkörper (4) und eine Spreizhülse (6) aufweist,
wobei die Spreizhülse (6) Spreizelemente (12) aufweist, die durch eine Bewegung des Spreizkörpers (4) entlang einer Längsachse (L) des Spreizankers (1) und dadurch bedingtes Einziehen des Spreizkörpers (4) in die Spreizhülse (6) aufspreizbar sind, derart, dass freie Enden (18) der Spreizelemente (12) beim Aufspreizen um Schwenkachsen (S) nach außen, von der Längsachse (L) wegbewegbar sind,
wobei mindestens ein Spreizelement (12) mindestens ein nach außen, von der Längsachse (L) weg abstehendes Halteelement (15) aufweist, das mit einem Grundkörper (14) des Spreizelements (12) verbunden ist,
**dadurch gekennzeichnet,**
**dass** das Halteelement (15) derart am Grundkörper (14) angeordnet ist, dass eine auf das Halteelement (15) wirkende, radial nach innen, zur Längsachse (L) hin gerichtete erste Kraft (F₁) eine resultierende zweite Kraft (F₂) bewirkt, die das freie Ende (18) des Spreizelements (12) nach außen, weg von der Längsachse (L), drückt.

2. Spreizanker nach Anspruch 1, **dadurch gekennzeichnet, dass** der Widerstand, der von dem Spreizelement (12) einem Aufspreizen entgegengesetzt wird, kleiner ist als der Widerstand, den das Halteelement (15) einer Verformung radial zur Längsachse (L) hin entgegensetzt.

3. Spreizanker nach Anspruch 1, **dadurch gekennzeichnet, dass** an einem Spreizelement (12) mehrere Halteelemente (15) angeordnet sind und dass der Widerstand, der von dem Spreizelement (12) einem Aufspreizen entgegengesetzt wird, kleiner ist als die Summe der Widerstände, die die Halteelemente (15) einer Verformung radial zur Längsachse (L) hin entgegensetzen.

4. Spreizanker nach einem der vorstehenden Ansprüche, **dadurch gekennzeichnet, dass** die Schwenkachse (S) zwischen dem freien Ende (18) des Spreizelements (12) und einem radial äußeren Rand (16) des Halteelements (15) angeordnet ist.

5. Spreizanker nach einem der vorstehenden Ansprüche, **dadurch gekennzeichnet, dass** jedes Spreizelement (12) durch mindestens eine Anbindung (13) mit einem Hülsenabschnitt (11) der Spreizhülse (6) verbunden ist.

6. Spreizanker nach Anspruch 5, **dadurch gekennzeichnet, dass** die Schwenkachse (S) in der Anbindung (13) liegt.

7. Spreizanker nach Anspruch 5 oder Anspruch 6, **dadurch gekennzeichnet, dass** die Dicke (d) der Anbindung (13) gleich der Dicke (d) einer Verbindungsstelle (17) zwischen dem Halteelement (15) und dem Grundkörper (14) des Spreizelements (12) ist.

8. Spreizanker nach einem der Ansprüche 5 bis 7, **dadurch gekennzeichnet,** der Querschnitt der Anbindung (13) oder die Summe der Querschnitte von Anbindungen (13) eines Spreizelements (12) kleiner als der Querschnitt der Verbindungsstelle (17) zwischen dem Halteelement (15) und dem Grundkörper (14) des Spreizelements (12) ist, oder, falls mehrere Halteelemente (15) an einem Spreizelement (12) angeordnet sind, kleiner als die Summe der Querschnitte der Verbindungsstellen (17) zwischen den Halteelementen (15) und dem Grundkörper (14) des Spreizelements (12) ist.

9. Spreizanker nach einem der vorstehenden Ansprüche, **dadurch gekennzeichnet, dass** das Halteelement (15) ein kragarmförmiger Flügel ist.

10. Spreizanker nach einem der vorstehenden Ansprüche, **dadurch gekennzeichnet, dass** das Halteelement (15) derart gestaltet ist, dass sein Abstand von der Längsachse (L) entgegen der Einbringrichtung (E) zunimmt.
